# EUROPÄISCHE PATENTSCHRIFT

(11) **EP 2 927 549 B1**
(45) Veröffentlichungstag und Bekanntmachung des Hinweises auf die Patenterteilung: **29.06.2016**
(21) Anmeldenummer: 15164646.0
(22) Anmeldetag: 05.11.2012
(51) Int. Cl.: F16K 17/06, F16K 17/26, G05D 16/10

(54) **DRUCKSPERRVENTILEINHEIT FÜR EINEN DRUCKSPEICHERBEHÄLTER**
PRESSURE STORAGE VALVE UNIT FOR A PRESSURE STORAGE CONTAINER
UNITÉ À CLAPET ANTI-RETOUR POUR UN RÉSERVOIR D'ACCUMULATION DE PRESSION

(43) Veröffentlichungstag der Anmeldung: 07.10.2015
(62) Teilanmeldung aus: 12191306.5
(73) Patentinhaber: Magna Steyr Fahrzeugtechnik AG & Co KG, 8041 Graz (AT)
(72) Erfinder: Mayr, Franz, 8323 St.Marein bei Graz (AT); Scheinost, Armin, 8344 Bad Gleichenberg (AT)
(74) Vertreter: Zangger, Bernd

(56) Entgegenhaltungen:
- WO-A1-2012/137424
- DE-A1- 10 312 672
- JP-A- 2006 146 776
- JP-A- 2008 299 766
- US-A1- 2004 231 727

## Beschreibung

### Gebiet der Erfindung

Die vorliegende Erfindung betrifft eine Drucksperrventileinheit für einen Druckspeicherbehälter für ein Medium sowie ein Druckspeichersystem.

### Stand der Technik

Derartige Vorrichtungen entsprechend dem Oberbegriff von Anspruch 1 können beispielsweise in Form von Einzelventilen oder als Ventilkombinationen im Einlassbereich von Tanks oder Tanksystemen von Kraftfahrzeugen eingesetzt werden, um bei einem Tank- oder Befüllvorgang ein Überfüllen des Druckspeicherbehälters mit Kraftstoff zu verhindern. Nach dem Befüllvorgang muss der Kraftstoff zum Verbrauch wieder entnommen werden. Dafür sind verschiedene Ventilkombinationen bekannt.

Ein Sperrventil ist aus der US 3,709,241 bekannt. Bei diesem Ventil ist zur Begrenzung des Fülldrucks in einem Tank ein Kolben in einer Bohrung eines Ventilkörpers geführt. Der Kolben weist ein elastisches Dichtelement auf und wird durch eine Feder gegen eine verengte Einlassöffnung gedrückt. Zwischen der Bohrung des Ventilkörpers und dem Kolben ist ein Spalt vorgesehen, durch den Gas vom Auslassbereich des Ventils in einen Bereich der Bohrung hinter dem Kolben gelangen kann, sodass der Druck im Auslassbereich eine axiale Kraft auf den Kolben ausübt und so die Feder beim Schließen der Einlassöffnung unterstützt. So wird verhindert, dass Gas vom Auslassbereich zurück zur Einlassöffnung strömt und gleichzeitig wird verhindert, dass der Fülldruck einen vorbestimmten Wert übersteigt. Eine Entnahme von Gas ist bei diesem Sperrventil nicht vorgesehen.

Außerdem ist bekannt, dass ein Fülldruck eines Druckspeicherbehälters oder eines Druckspeichersystems durch Messung des Druckes und durch elektronische Steuerung elektrischer Ventile kontrolliert und begrenzt werden kann.

Die EP 1 855 048 B1 beschreibt eine Ventilanordnung für einen Gasbehälter, die an dem Gasbehälter angeordnet ist, aufweisend: eine Abführleitung eines Gases, die der Innenseite des Gasbehälters ermöglicht, mit der Außenseite zu kommunizieren; eine erste Gasleitung, die der Innenseite des Gasbehälters ermöglicht, mit der Außenseite zu kommunizieren, und die sich von der Abführleitung unterscheidet; ein abführseitiges Ventil, das an der Abführleitung angeordnet ist und das so konfiguriert ist, dass es die Abführleitung absperrt; ein erstes Ventil, das an der ersten Gasleitung angeordnet ist und das so konfiguriert ist, dass es die erste Gasleitung absperrt; einen Kommunikationsweg, der einen Abschnitt der Abführleitung außerhalb des Gasbehälters von dem abführseitigen Ventil aus betrachtet mit einem Abschnitt der ersten Gasleitung in dem Gasbehälter von dem ersten Ventil aus betrachtet verbindet; und einen Kommunikationssperrmechanismus, der den Kommunikationsweg öffnet und schließt, dadurch gekennzeichnet, dass der Kommunikationssperrmechanismus so konfiguriert ist, dass er den Kommunikationsweg öffnet, wodurch das in dem Gasbehälter gespeicherte Gas durch die erste Gasleitung, den Kommunikationsweg und die Abführleitung in dieser Reihenfolge strömt, wobei die erste Gasleitung eine Befüllungsleitung ist, die den Gasbehälter mit dem Gas befüllt.

Die EP 1 855 048 B1steht stellvertretend für eine Anzahl von kombinierten Ventilanordnungen die das Befüllen und die Entnahme von Fluiden aus Druckspeicherbehältern ermöglichen. Bei den genannten Anwendungen ist es jedoch erwünscht, dass ein zulässiger Betriebsdruck eines Druckspeicherbehälters oder eines Druckspeichersystems im Verlauf eines Befüllvorganges zuverlässig eingehalten und so höchste Betriebssicherheit gewährleistet wird. Der Befüllvorgang soll möglichst schnell und mit nur geringen Energieverlusten durchführbar sein. Verschleiß an Ventilkomponenten soll gering gehalten und Beschädigungen an Druckspeicherbehältern und Druckleitungen sollen verhindert werden. Außerdem ist es erwünscht die Verrohrung der Druckspeichersysteme zu vereinfachen und die Anzahl und Komplexität der Druckleitungen zu vermindern.

Eine Drucksperrventileinheit dieser Art ist bereits aus dem Dokument US 20040231727 bekannt.

Es ist eine Aufgabe der Erfindung, kombinierte Ventilanordnungen der genannten Art in dieser Hinsicht zu verbessern und insbesondere eine Drucksperrventileinheit anzugeben, die dauerhaft einem Druckspeicherbehälter zugeordnet ist, die eine minimale Anzahl an Druckleitungen erfordert und die auch ohne elektrische und elektronische Komponenten funktioniert.
Es ist außerdem eine Aufgabe der Erfindung verbesserte Druckspeichersysteme mit erhöhter Betriebssicherheit zu ermöglichen.

### Zusammenfassung der Erfindung

Die Lösung der Aufgabe erfolgt durch eine Drucksperrventileinheit für einen Druckspeicherbehälter für ein Medium, wobei ein Ventilgehäuse eine Ventilkammer mit einer Zulauföffnung und einer dem Druckspeicherbehälter zugewandten Auslassöffnung, einen beweglichen Kolben, und zumindest eine Feder aufweist, wobei der Kolben zumindest einen axialen Verbindungskanal aufweist und durch zumindest zwei in der Ventilkammer angeordnete Dichtelemente axial beweglich geführt ist, wobei eine einem Einlassbereich der Ventilkammer zugewandte erste Kolbenwirkfläche des Kolbens und ein Dichtkörper oder das Ventilgehäuse einen Ventilsitz bilden, und wobei durch Änderung des Druckes in einem an eine zweite Kolbenwirkfläche angrenzenden Speicherbereich der Ventilkammer der Kolben axial bewegbar ist und eine zwischen der Zulauföffnung und der Auslassöffnung angeordnete Durchlassöffnung reversibel verschlossen und geöffnet werden kann, wobei die Durchlassöffnung in drucklosem Zustand durch die Feder offen gehalten wird und wobei der Speicherbereich der Ventilkammer über einen Entnahmekanal und ein Entnahmeventil mit dem Einlassbereich der Ventilkammer verbindbar angeordnet ist, wobei zwischen dem Speicherbereich und einem zwischen dem Einlassbereich und dem Speicherbereich der Ventilkammer angeordneten Entlastungsbereich ein Überdruckventil angeordnet ist, dessen Öffnungsdruck über dem Sperrdruck des Drucksperrventiles liegt.

Es resultiert eine rein mechanische Drucksperrventileinheit, die aufgrund einer eingestellten Federkraft ab einem bestimmten Druck die Durchlassöffnung dicht verschließt und weder bei weiterer Druckzunahme oder Druckabnahme bis Unterdruck in der Zulauföffnung öffnet und somit immer verschlossen bleibt.

Die Entnahme von Medium aus dem Druckspeicherbehälter erfolgt über einen Entnahmekanal und ein Entnahmeventil das mit einem Einlassbereich verbindbar angeordnet ist, oder auch an einer oder mehreren anderen Stellen im Druckspeichersystem.

Der erfinderische Vorteil dieser mechanischen Drucksperrventileinheit liegt beim Befüllvorgang darin, dass ein nachgeschaltetes Druckspeichersystem nur den Druck erreicht der gewünscht ist und unabhängig vom Druck vor der Drucksperrventileinheit und ohne einen elektrischen Aktuator die Drucksperrventileinheit immer sicher verschlossen bleibt und somit den Druck im nachgeschalteten Druckspeichersystem einerseits sicher hält und eine weitere Druckzunahme durch nachströmendes Medium nicht zulässt. Ein weiterer Vorteil dieser Ventilausführung liegt darin, dass zwar bei Undichtigkeiten am Dichtsitz zwischen Kolben und Dichtkörper das nachgeschaltete Druckspeichersystem einer nicht gewünschten Druckerhöhung ausgesetzt sein kann, wobei mit Zunahme des Druckes auf der Auslassseite die Anpresskraft des Kolbens auf den Dichtkörper zunimmt und somit die Undichtigkeit wieder verringert wird.

Besonders vorteilhaft wirkt sich aus, dass die Durchlassöffnung in drucklosem Zustand durch die Kraft der Feder offen gehalten wird. So kann das Medium bis zur Schlussphase des Tankvorganges ungehindert in den Druckspeicherbehälter strömen und schädliche Vibrationen im Bereich der Ventilkammer werden vermieden.

Wenn der Druck in der Zulauföffnung unter den Druck im Speicherbereich abfällt, kann das Entnahmeventil geöffnet werden und es fließt Medium vom Speicherbereich durch den Entnahmekanal zur Zulauföffnung. Dadurch wird eine Entnahme von Medium aus dem nachgeschalteten Druckspeicherbehälter oder -system über die Zuleitung möglich. Das erleichtert die Verwendung von zusätzlichen Druckspeicherbehältern und vereinfacht die Verrohrung von Druckspeichersystemen erheblich.

Die erfindungsgemäße Drucksperrventileinheit ist für unterschiedliche Medien wie Wasserstoff, Methan, Erdgas oder ein Gemisch aus Wasserstoff und Erdgas besonders geeignet. Durch entsprechende Modifikationen ist auch eine Verwendung mit Flüssig-Gas (LPG) und anderen flüssigen Medien möglich.

Erfindungsgemäß ist zwischen dem Speicherbereich und dem Entlastungsbereich der Ventilkammer ein Überdruckventil angeordnet, dessen Öffnungsdruck über dem Sperrdruck des Drucksperrventiles liegt. In einer Ausführungsform ist das Überdruckventil im Kolben integriert angeordnet. Dadurch wird die Betriebssicherheit des Druckspeichersystems erhöht. Da die Drucksperrventileinheit ja verschlossen bleibt, würde eine zum Beispiel durch einen Brand verursachte Überhitzung des Mediums und ein damit verursachter Druckanstieg im Druckspeicherbehälter ohne ein derartiges Überdruckventil eine Zerstörung des Druckspeicherbehälters bedeuten. Besonders bevorzugt ist eine Kombination von Drucksperrventileinheit und Überdruckventil in einem gemeinsamen Ventilgehäuse.

Die Lösung der Aufgabe erfolgt außerdem durch ein Druckspeichersystem umfassend zumindest einen Druckspeicherbehälter und zumindest eine damit wirkverbundene Drucksperrventileinheit.

Unter Verwendung der erfindungsgemäßen Drucksperrventileinheit, allein und auch in Kombination mit elektrischen Ventilen, können mehrere Druckspeicherbehälter mit unterschiedlichem zulässigem Betriebsdruck derart verbunden werden, dass diejenigen Druckspeicherbehälter, die einen niedrigeren zulässigen Betriebsdruck aufweisen als ein üblicher oder für das ganze System vorgesehener (höherer) Fülldruck, eine auf den jeweiligen zulässigen Betriebsdruck des jeweiligen Druckspeicherbehälters abgestimmte Drucksperrventileinheit vorgeschaltet haben, um den jeweiligen Druckspeicherbehälter vor Übertankung zu schützen.

Dies dient der Erhöhung der Sicherheit gegen Überfüllung beim Betanken und ermöglicht die Anwendung von zusätzlichen kostengünstigeren Druckspeicherbehältern mit niedrigeren zulässigen Druckniveaus. Dadurch wird es aber auch möglich, zu einem bestehenden System kostengünstig mit einem Zusatzsystem und höherem Druckniveau die Speicherkapazität eines vorhandenen Druckspeichersystems massiv zu erhöhen.

Weiterbildungen der Erfindung sind in den abhängigen Ansprüchen, der Beschreibung sowie den beigefügten Zeichnungen angegeben.

Vorzugsweise ist das Entnahmeventil als Kugel- oder Kegelventil ausgebildet und wird durch eine Stellfeder in einem drucklosen Zustand geschlossen gehalten, wobei die Stellfeder auf der dem Einlassbereich zugewandten Seite des Entnahmeventils angeordnet ist. Dadurch ist das Kugelventil durch die Stellfeder bei Überdruck in der Zulauföffnung und auch drucklos permanent verschlossen. Wenn der Druck in der Zulauföffnung unter den Druck im Speicherbereich abfällt, kann in Abhängigkeit von der Federkraft der Stellfeder das Kugelventil öffnen und es fließt Medium vom Speicherbereich durch den Entnahmekanal zurück zur Zulauföffnung.

In einer besonders bevorzugten Ausführungsform der Drucksperrventileinheit ist die Federkraft der Stellfeder über eine Feder-Fixierschraube einstellbar. Der große Vorteil dieser Anordnung liegt darin, dass durch die Einstellmöglichkeit der Federkraft das Kugelventil beliebig weit unter dem Sperrdruck der Drucksperrventileinheit wieder öffnet. Somit ist aber auch der Zeitpunkt und das Druckniveau im Speicherbereich der Ventilkammer, ab dem die Drucksperrventileinheit öffnet, einstellbar.

In einer weiteren besonders bevorzugten Ausführungsform der Drucksperrventileinheit ist die Feder-Fixierschraube koaxial mit der Stellfeder angeordnet und weist einen axialen Kanal auf der als Drossel ausgebildet ist. Dadurch ist eine gedämpfte Zuschaltung von Medium vom Speicherbereich der Ventilkammer durch die Drosselstelle im Kanal der FederFixierschraube zur Zulauföffnung und somit ein langsamer Druckabbau im Speicherbereich möglich. Druckspitzen im Bereich der Zulauföffnung werden vermieden.

In einer bevorzugten Ausführung sind der Entnahmekanal und das Entnahmeventil im Ventilgehäuse integriert angeordnet. In einer weiteren bevorzugten Ausführungsform sind der Entnahmekanal und das Entnahmeventil im Kolben integriert angeordnet. Dadurch wird ein Platz sparender Aufbau ermöglicht und es werden sowohl die Herstellung und der Zusammenbau als auch die Montage der Drucksperrventileinheit in Druckspeichersystemen vereinfacht.

Vorzugsweise sind die erste Kolbenwirkfläche und der Dichtkörper oder das Ventilgehäuse so ausgebildet, dass in einer Schließposition des Kolbens eine Dichtwirkung an einer Dichtkante im Bereich des äußeren Randes der ersten Kolbenwirkfläche auftritt.

Äußerer Rand bedeutet hier, von der Achse des Kolbens betrachtet, radial außen liegend. Der äußere Rand des Kolbens kann beispielsweise im Bereich der ersten Kolbenwirkfläche schräg gefast oder abgerundet sein. Auch kann die erste Kolbenwirkfläche am äußeren Rand einen erhöhten Wulst aufweisen, um die Dichtwirkung in diesem Bereich zu lokalisieren.

Dadurch wird bei Überschreiten eines Sperrdrucks bzw. bei Anstieg des Druckes über den Sperrdruck auf den Kolben keine Kraft mehr gegen die Schließrichtung des Kolbens ausgeübt. Der Sperrdruck und das Schließverhalten der erfindungsgemäßen Drucksperrventileinheit werden somit unabhängig vom Druck in der Zulauföffnung. Außerdem kann bei geschlossenem Ventil auch bei einem Druckanstieg in der Zulauföffnung durch den Druck in der Zulauföffnung keine axiale Kraft auf den Kolben ausgeübt werden und die Drucksperrventileinheit bleibt auch bei extremen Druckstößen sicher geschlossen.

Es wird außerdem sichergestellt, dass die Drucksperrventileinheit auch dann geschlossen bleibt, wenn der Druck in der Zulauföffnung unter den Sperrdruck absinkt, bei dem der Kolben zuvor geschlossen hat, da die nun fortwährende Schließkraft im Wesentlichen nur durch den Druck im Speicherbereich der Ventilkammer auf die Kolbenwirkfläche abzüglich der Federkraft der Feder bestimmt wird.

Dadurch, dass die Zulauföffnung vorzugsweise radial außerhalb der Kolbenwirkfläche in den Einlassbereich der Ventilkammer mündet, wird zusätzlich sichergestellt, dass durch den Druck in der Zulauföffnung keine axiale Kraft auf den Kolben ausgeübt werden kann.

Vorzugsweise ist die zweite Kolbenwirkfläche grösser ausgebildet als die erste Kolbenwirkfläche. Durch eine relativ größere zweite Kolbenwirkfläche ist es möglich kleinere Werte für den Sperrdruck der Drucksperrventileinheit zu realisieren.
Besonders bevorzugt ist der Kolben zylindrisch und weist an seiner Außenseite Gleitflächen in zumindest zwei Bereichen mit vorzugsweise unterschiedlichen Durchmessern auf.

Besonders bevorzugt sind die zumindest zwei Dichtelemente in entsprechenden Ausnehmungen im Ventilgehäuse angeordnet. Die kostengünstigste Variante wäre, die Dichtelemente in jeweils einer Nut im Kolben unterzubringen. In Nuten auf dem Kolben angeordnete Dichtelemente erweisen sich bei sehr hohen Drucken (200 bis 1000 Bar) als problematisch. In Abhängigkeit des Druckes wird eine variable Kraft auf den Kolben ausgeübt und beeinflusst daher den Sperrdruck der Drucksperrventileinheit. Durch die vorzugsweise Anordnung der Dichtungen in Ausnehmungen oder Nuten im Ventilgehäuse, insbesondere in zylindrischen Abschnitten der Ventilkammer. Dadurch keine variable Krafteinwirkung auf den Kolben durch den Druck des Mediums - die Drucksperrventileinheit bleibt zuverlässig geschlossen.

Der Dichtkörper und/oder der Kolben sind vorzugsweise aus einem elastisch verformbaren Material hergestellt. Durch eine den sehr hohen Drucken (200 bis 1000 Bar) angepasste Materialwahl wird die Dichtwirkung optimiert und Verschleiß am Ventilsitz vermieden. Besonders geeignete Materialien umfassen Kunststoffe wie PEEK und PAS oder keramische Werkstoffe wie Aluminiumoxid und Siliziumcarbid, aber auch Spezialstähle und andere Metalle. Die Drucksperrventileinheit muss keinen separaten Dichtkörper aufweisen. Möglich ist auch, dass der Kolben direkt gegen das Ventilgehäuse dichtet. Bevorzugte Materialkombinationen sind dem Fachmann geläufig.

Ein zwischen dem Einlassbereich und dem Speicherbereich der Ventilkammer angeordneter Entlastungsbereich der Ventilkammer weist vorzugsweise zwischen den zumindest zwei Dichtelementen eine Entlastungsöffnung auf. Dadurch kann bei Undichtigkeiten an einem der Dichtelemente austretendes Medium nicht zu einer Druckerhöhung im jeweils anderen Bereich der Ventilkammer führen. Weiters sorgt der Entlastungsbereich für einen Druckausgleich beim Verschieben des Kolbens, sodass schnelle Kolbenbewegungen und somit kurze Reaktionszeiten des Ventils möglich werden.

Gemäß einer besonders bevorzugten Ausführungsform der Erfindung ist die Entlastungsöffnung mit einer Leitung zur Entsorgung von austretendem Medium verbunden. Dadurch kann gegebenenfalls austretendes (brennbares) Medium aus der unmittelbaren Umgebung der Drucksperrventileinheit abtransportiert und an einer geeigneten Stelle ohne Gefahr für Fahrzeuginsassen bei niedrigem Druck weiterbehandelt werden.

In einer bevorzugten Ausführungsform ist der Sperrdruck der Drucksperrventileinheit im Wesentlichen durch die Federkraft der Feder und die Kolbenwirkflächen bestimmt. Die Federkraft der Feder wird in Abstimmung mit den Kolbenwirkflächen so bemessen, dass bei ansteigendem Druck im Speicherbereich nach Überschreitung eines vorbestimmten Sperrdruckes der Drucksperrventileinheit zuverlässig schließt und verschlossen bleibt. Die Reibung an den Dichtelementen spielt ebenfalls eine Rolle in der Bemessung der Federkraft.
In einer Ausführungsform ist die Federkraft der Feder über die Einschraubtiefe eines Deckels einstellbar. Dadurch können beispielsweise beim Zusammenbau Toleranzen der Federkraft und/oder Unterschiede in der Reibung zwischen Kolben und Dichtelementen, etwa bewirkt durch Fertigungstoleranzen, ausgeglichen werden.

In einer weiteren Ausführungsform der Drucksperrventileinheit sind Distanzhalter am Deckel des Ventilgehäuses oder entsprechende Freistellungen an der zweiten Kolbenwirkfläche des Kolbens vorgesehen. Dadurch wird eine gute Druckverteilung auf die zweite Kolbenwirkfläche des Kolbens erreicht. Diese Ausführung beschleunigt das Schließen des Kolbens auch bei sehr geringer Druckdifferenz zwischen den Kolbenwirkflächen.

Günstig ist auch, wenn das Ventilgehäuse an dem die Auslassöffnung aufweisenden Ende zumindest teilweise in eine Öffnung des Druckspeicherbehälters hineinragt und so dauerhaft mit dem Druckspeicherbehälter verbunden ist. In dieser Ausführungsform ist die Drucksperrventileinheit platzsparend und vor mechanischer Krafteinwirkung geschützt im Inneren eines Druckspeicherbehälters angeordnet. Alternativ dazu kann die Auslassöffnung über eine Druckleitung dauerhaft mit dem Druckspeicherbehälter verbunden sein. Dadurch wird die Einbaulage der Drucksperrventileinheit, beispielsweise in einem Tankstutzen, weitgehend unabhängig von der Einbaulage des Druckspeicherbehälters.

In einer weiteren Ausführungsform der erfindungsgemäßen Drucksperrventileinheit ist die Auslassöffnung über einen Ventilaufnahmeblock oder über einen zumindest ein zusätzliches Ventil aufweisenden Speicherventilblock mit dem Druckspeicherbehälter verbindbar angeordnet. Speicherventilblöcke sind im Stand der Technik bekannt und sind bauliche Einheiten, die mehrere Ventilfunktionen in einem kompakten Gehäuse vereinigen und fest mit einer Öffnung eines Druckspeicherbehälters verbindbar sind. Dadurch wird die zum Schutz vor Überfüllung dienende Sperrfunktion der Drucksperrventileinheit modular und platzsparend um weitere Funktionen erweiterbar.

### Kurzbeschreibung der Zeichnungen

Die Erfindung wird im Folgenden beispielhaft unter Bezugnahme auf die Zeichnungen beschrieben.
- Fig. 1: ist eine Schnittansicht einer Ausführungsform eines erfindungsgemäßen Sperrventils.
- Fig. 2: ist eine Schnittansicht einer erfindungsgemäßen Drucksperrventileinheit, welche ein Sperrventil gemäß Fig. 1 mit zusätzlichen eingebauten Ventilen zeigt.
- Fig. 3: ist eine Schnittansicht einer Ausführungsform eines Kolbens für eine erfindungsgemäße Drucksperrventileinheit.
- Fig. 4: ist eine schematische Darstellung einer Vorrichtung zum Betanken eines Kraftfahrzeugs an einer Tankstelle mit 700 bar Zapfdruck, beinhaltend ein System von zwei Druckbehältern mit unterschiedlichem zulässigem Betriebsdruck.
- Fig. 5: ist eine schematische Darstellung einer weiteren Vorrichtung zum Betanken eines Kraftfahrzeugs an einer Tankstelle mit 700 bar Zapfdruck, beinhaltend ein Druckspeichersystem mit zwei Druckbehältern mit unterschiedlichem zulässigem Betriebsdruck.

### Detaillierte Beschreibung der Erfindung

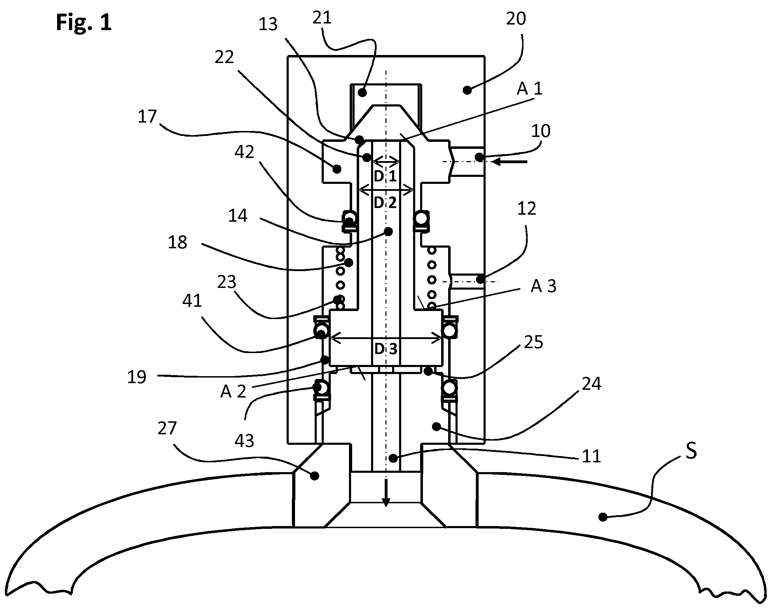

In der in Figur 1 gezeigten, beispielhaften Ausführungsform ist das Sperrventil erfindungsgemäß über einen Ventilaufnahmeblock 27 in einer Öffnung eines Druckspeicherbehälters S angeordnet. Als Sperrventil wird hier die Gesamtheit der den Befüllvorgang kontrollierenden Teile der erfindungsgemäßen Drucksperrventileinheit bezeichnet. In einem Ventilgehäuse 20 ist ein Kolben 22 montiert, der zwei Abschnitte mit unterschiedlichen Außendurchmessern D2, D3 und einen als zentrale Hohlbohrung ausgeführten Verbindungskanal 14 mit dem Innendurchmesser D1 aufweist. Der Kolben 22 stützt sich am Übergang zum größeren Außendurchmesser D3 über die Auflage A3 durch eine Feder 23 am Ventilgehäuse 20 ab, wodurch der Kolben 22 auf Anschlag zum Deckel 24 und dadurch in einem drucklosen Einbauzustand die Durchlassöffnung 13 in geöffneter Stellung gehalten wird.

Der Kolben 22 wird in den beiden Abschnitten mit unterschiedlichen Außendurchmessern D2,D3 von Dichtelementen 41,42 so abgedichtet, dass der Raum mit der Feder 23 zwischen diesen Dichtungen frei durch die Ventilationsöffnung 12 zum Atmosphärendruck atmen kann. Die Dichtelemente 41,42 können wahlweise im Kolben 22 oder wie dargestellt im Ventilgehäuse 20 montiert sein. Die Dichtung 43 dichtet den einstellbaren Deckel 24 gegen das Ventilgehäuse 20 ab.

Bei einem Befüllvorgang, zum Beispiel eines an der Auslassöffnung 11 angeordneten Druckspeicherbehälters, kann Medium durch die Zulauföffnung 10 im Einlassbereich 17 der Ventilkammer über die Durchlassöffnung 13 und durch den Verbindungskanal 14 in den Speicherbereich 19 der Ventilkammer, und in der Folge durch die Auslassöffnung 11 in den nachfolgenden Druckspeicherbehälter S gelangen. Wenn der Druck im gesamten Druckspeichersystem so weit ansteigt, dass aufgrund der Kraftverhältnisse durch den anliegenden Druck auf die Kolbenwirkflächen A2 und A1 der Kolben 22 die Federkraft der Feder 23 überwindet, wird der Kolben 22 angehoben und gegen den Dichtkörper 21 geschoben. Sobald der Kolben angehoben wird, werden die von den Distanzhaltern 25 anfangs verdeckten Anlageflächen des Kolbens nun zusätzlich mit Druck beaufschlagt, wodurch auf den Kolben eine größere Kraft wirkt und somit das Sperrventil beschleunigt schließt. Dieser Druck entspricht dem Sperrdruck.

Um keine weitere Druckkraft auf den Kolben zu bekommen, ist es daher von Vorteil, wenn der Kolben am äußeren Durchmesser D2 zum Dichtkörper 21 abdichtet. Bei einem Druckanstieg im Einlassbereich 17 bleibt das Sperrventil weiterhin geschlossen, da auf die erste Kolbenwirkfläche A1 die Druckerhöhung nicht mehr wirkt. Wenn der Druck in der Einlassöffnung 10 unter den Druck absinkt bei dem der Kolben geschlossen hat, bleibt das Ventil trotzdem geschlossen, da die Schließkraft durch den Druck in der Auslassöffnung 11 auf die Kolbenwirkfläche A2, abzüglich der Federkraft der Feder 23, bestimmt wird und sich dieser Zustand nicht geändert hat. Somit ist es möglich, auf der Einlassseite 10 Unterdruck aufzubringen, ohne dass das Ventil dadurch öffnet. Die Federkraft der Feder 23 ist mit der Einschraubtiefe des Deckels 24 zusätzlich einstellbar.

Um eine gute Druckverteilung auf die zweite Kolbenwirkfläche A2 zu erhalten sind entweder Distanzhalter 25 am Deckel 24 oder entsprechende Freistellungen am Kolben darzustellen.

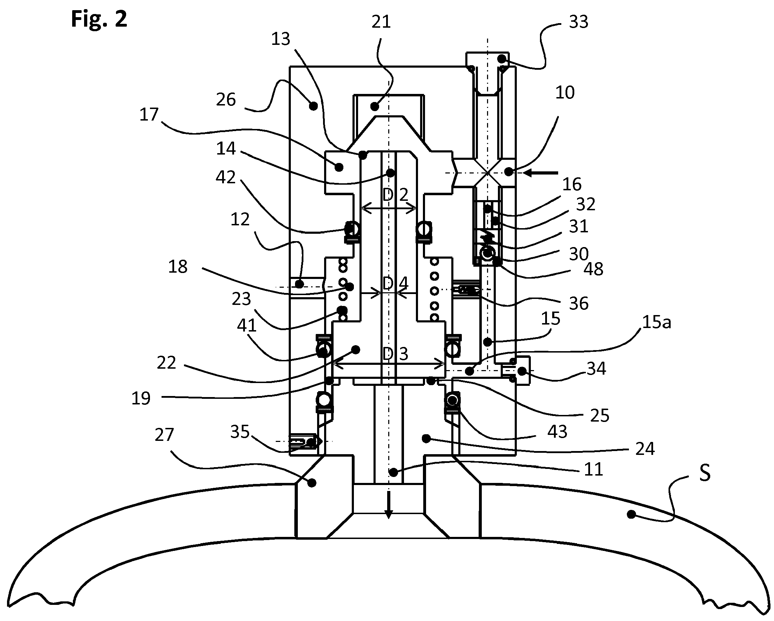

Figur 2 zeigt beispielhaft eine vollständige erfindungsgemäße Drucksperrventileinheit. Diese umfasst im Wesentlichen alle Teile des in Fig. 1 gezeigten Sperrventils mit gleichen Bezugszeichen. Das veränderte Ventilgehäuse wird hier mit der Bezugszahl 26 bezeichnet und weist einen beispielhaft zwischen dem Speicherbereich 19 und der Zulauföffnung 10 dargestellten Entnahmekanal 15 auf in dem ein Entnahmeventil 30 angeordnet ist, dass entsprechend den Druckverhältnissen öffnet und schließt. Eine vorteilhafte Ausführung ergibt sich in der Ausführung des Entnahmeventils 30 als mechanisches Kugelventil, wobei das Kugelventil durch eine Feder 31 drucklos permanent verschlossen ist. Wenn der Druck in der Zulauföffnung 10 unter den Druck im Speicherbereich 19 und somit im Entnahmekanal 15,15a abfällt, kann in Abhängigkeit von der Federkraft der Stellfeder 31 das Kugelventil öffnen und es fließt Medium vom Speicherbereich 19 durch den Entnahmekanal 15 und den Kanal 16 in der Feder-Fixierschraube 32 wieder zur Zulauföffnung 10 zurück. Erst dadurch wird eine Entnahme von Medium aus dem nachgeschalteten Druckspeichersystem möglich, vorausgesetzt das nachgeschaltete Druckspeichersystem weist keine weiteren Entnahmeeinrichtungen auf. In weiterer Folge baut sich der Druck im Speicherbereich 19 ab und abhängig von der Federhysterese der Feder 23 und der Reibung der Dichtelemente 41,42 wird der Kolben 22 des Sperrventils zeitverzögert nach unten gedrückt und die Durchlassöffnung 13 freigegeben. Dadurch wird zusätzlich zum Strom durch das Entnahmeventil 30 ein Rückstrom des Mediums vom Speicherbereich 19 durch den Verbindungskanal 14, der einen Durchmesser D4 aufweist, zur Zulauföffnung 10 ermöglicht. Dadurch wird wiederum ein Druckausgleich zwischen Speicherbereich 19 der Ventilkammer und Zulauföffnung 10 hergestellt und das Entnahmeventil 30 schließt wieder aufgrund der Federkraft der Stellfeder 31. Der Zulaufmengenstrom kann durch den Bohrungsdurchmesser D4 entsprechend den jeweiligen Anforderungen abgestimmt werden.

Die Dichtung 48 dichtet ein als Baugruppe eingeschraubtes Entnahmeventil 30 gegen den Ventilkörper 26. Das Entnahmeventil kann auch in Kombination mit elektrischen Ventilen oder einem mechanisch einstellbaren Ventil zur beliebigen Steuerung des Zeitpunktes für das Öffnen der Drucksperrventileinheit eingesetzt werden.

Die Sicherung des eingeschraubten Deckels 24 und somit die sichere Festlegung des Sperrdruckes kann wie technisch üblich z.B. mit einer Klemmschraube 35 erreicht werden. Notwendige Bohrungen können durch Schrauben mit Dichtringen 33 und 34, ebenfalls wie technisch üblich, nach außen abgedichtet werden.

Die Drucksperrventileinheit beinhaltet eine Kombination von Drucksperrventileinheit mit einem Überdruckventil 36 in einem gemeinsamen Ventilgehäuse 26 zwischen der Leitung auf dem Entnahmekanal 15 und dem als Raum für die Feder 23 dienenden Entlastungsbereich 18 mit Entlastungsöffnung 12. Der sichere Abtransport von entweichendem Medium beseitigt jeden weiteren sicherheitskritischen Faktor.
Ein Öffnen des Sperrventiles erfolgt erst, wenn der Druck in der Auslassöffnung 11 entweder dadurch absinkt, dass im nachfolgenden System über eine separate Stelle Medium entnommen wird und dadurch der Druck unter den Sperrdruck absinkt. Das Sperrventil öffnet entweder indem durch Entnahme aus dem Druckspeicherbehälter durch den Verbraucher der Druck im Speicherbereich 19 unter den Schließdruck des Sperrventils absinkt oder mittels des in Fig. 2 dargestellten im Entnahmekanal 15,15a angeordneten Entnahmeventils 30.

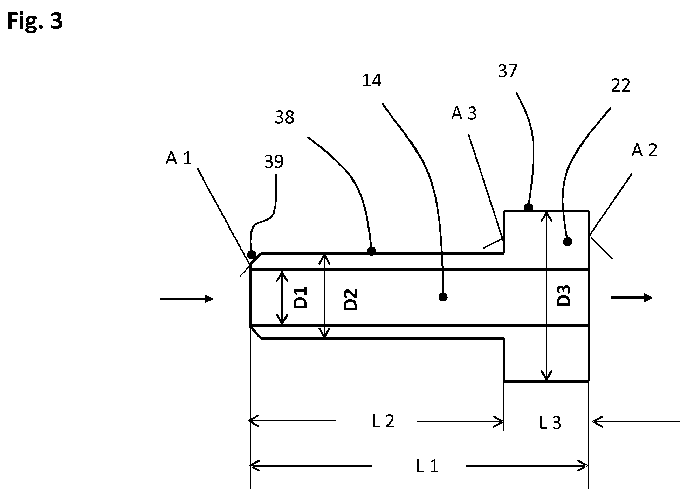

In Figur 3 ist ein Kolben 22 der erfindungsgemäßen Drucksperrventileinheit exemplarisch im Detail dargestellt. Der zylindrische Kolben mit der Gesamtlänge L1 weist in der gezeigten Ausführungsform zwei Abschnitte mit unterschiedlichen Außendurchmessern D2 und D3 auf. Ein erster Kolbenabschnitt weist eine normal zur Achse des Kolbens 22 ausgebildete erste Kolbenwirkfläche A1, eine als Fase auf einer Kante des Kolbens ausgebildete Dichtkante 39 und eine erste Gleitfläche 38 mit der Länge L3 und einem Außendurchmesser D2 auf. Ein zweiter Kolbenabschnitt weist eine zweite Kolbenwirkfläche A2, eine Auflage A3 für die Feder 23 und eine zweite Gleitfläche 37 mit der Länge L3 und einem Außendurchmesser D3 auf. Der Verbindungskanal 14 ist als axiale Bohrung über die gesamte Länge L1 des Kolbens 22 ausgebildet und weist einen Innendurchmesser D1 auf. Der Verbindungskanal 14 verbindet die zwei Kolbenwirkflächen A1,A2 und wird entsprechend der Ausführungsform des Ventilgehäuses 20 und dem Betriebszustand der Drucksperrventileinheit von Medium durchströmt.

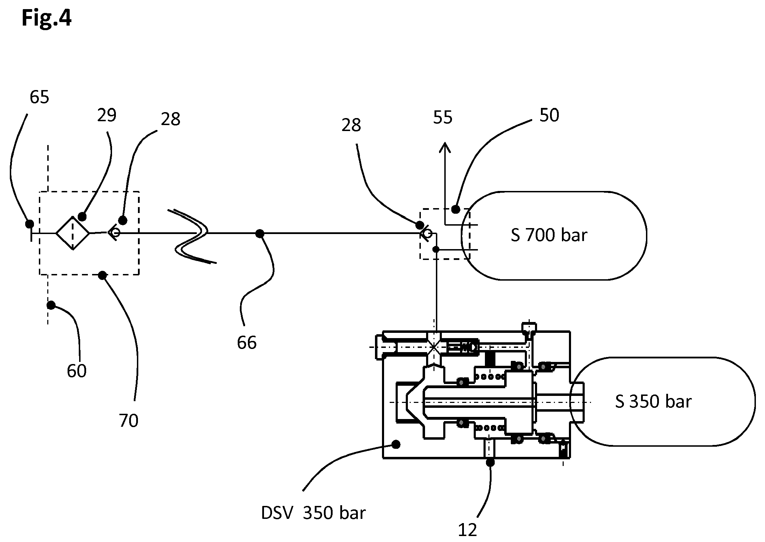

Figur 4 zeigt beispielhaft ein Druckspeichersystem, in dem die Druckleitung 66 von der Tankstutzeneinheit 70 ohne Verzweigung zu einem Speicherventilblock 50 eines ersten Druckspeicherbehälter S (700 bar zulässiger Betriebsdruck) führt. Vom einem Einlassbereich der Speicherventilblocks 50 führt eine weitere Druckleitung zu einem untergeordneten zweiten Druckspeicherbehälter S (350 bar zulässiger Betriebsdruck) wobei die erfindungsgegenständliche Drucksperrventileinheit DSV mit integriertem Entnahmeventil das Druckspeichersystem absichert, indem die Drucksperrventileinheit DSV bei Erreichen der voreingestellten 350 bar Sperrdruck schließt.

Ein Öffnen der Drucksperrventileinheit DSV erfolgt erst, wenn der Druck im ersten Druckspeicherbehälter und somit auch in der Verbindungsleitung zwischen den Druckspeicherbehältern durch Entnahme von Medium unter den Sperrdruck (350 bar) der Drucksperrventileinheit DSV absinkt. Die Entleerung des Druckspeichersystems erfolgt durch einen im Speicherventilblock 50 integrierten Druckregler und eine Druckleitung 55 zu einem Verbraucher. Das in Fig. 4 gezeigte Druckspeichersystem weist eine sehr geringe Anzahl an separaten Komponenten und eine einfache Topologie der Druckleitungen auf.

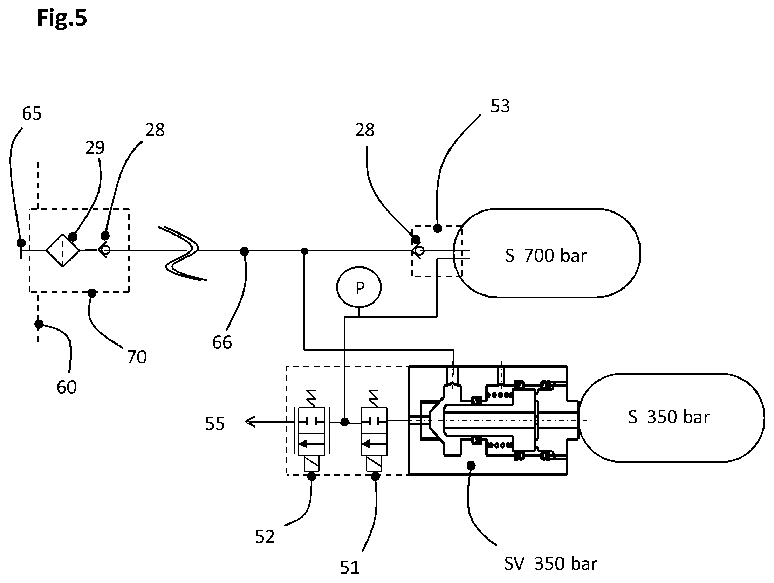

Figur 5·zeigt beispielhaft ein Druckspeichersystem umfassend eine Kombination eines Sperrventils SV mit elektrisch betätigbaren Ventilen in einer Anwendung mit paralleler Anordnung zweier Druckspeicherbehälter S mit unterschiedlichen zulässigen Betriebsdrucken. Die Tankstutzeneinheit 70 (entsprechend dem Stand der Technik) ist eingebaut in einer Karosserie 60 eines Kraftfahrzeugs und weist einen Tankstutzen 65 auf. Beim Befüllvorgang strömt das Medium durch ein Filter 29 und ein Rückschlagventil 28 in die verzweigte Druckleitung 66.

Ein Zweig der Druckleitung 66 führt über einen ersten Speicherventilblock 53 mit eingebautem Sicherheitsventil und Rückschlagventil 28 in den ersten Druckspeicherbehälter S mit 700 bar zulässigem Fülldruck. Zur Entnahme von Medium weist der erste Speicherventilblock 53 zusätzlich eine Entnahmeleitung auf, wobei die Entnahmeleitung zu einem Druckregler 52 führt. Der andere Zweig führt in eine hier radial angeordnete Einlassöffnung 10 eines für 350 bar Sperrdruck ausgelegten Sperrventils SV das mit seiner Auslassöffnung 11 direkt mit einem zweiten Druckspeicherbehälter S mit 350 bar zulässigem Fülldruck verbunden ist. Das in Fig. 5 gezeigte Sperrventil SV weist im Bereich des Dichtkörpers zusätzlich eine Öffnung auf, die mit einem elektrisch betätigbaren Sicherheitsventil 51 verbunden ist. Das elektrisch betätigbare Sicherheitsventil 51 ist hier ein Magnetventil, das elektrisch geöffnet und geschlossen werden kann. Dem elektrisch betätigbaren Sicherheitsventil 51 nachgeschaltet ist ein Druckregler 52. In die Verbindungsleitung zwischen dem elektrisch betätigbaren Sicherheitsventil 51 und dem Druckregler 52 mündet die vom ersten Druckspeicherbehälter S kommende Verbindungsleitung. Diese Verbindungsleitung weist einen Drucksensor P auf. Das elektrisch betätigbare Sicherheitsventil 51 ermöglicht die Entnahme von Medium aus dem zweiten Druckspeicherbehälter S mit 350 bar zulässigem Fülldruck, sobald der Druck in der Verbindungsleitung unter den Sperrdruck des Sperrventils SV gesunken ist.

Eine weitere nicht in den Figuren dargestellte Variante eines erfindungsgemäßen Sperrventils SV variiert die in Fig. 1 dargestellte Ausführung. Die in der Fig. 1 im Deckel 24 angeordnete Auslassöffnung 11 wird in das Ventilgehäuse 20 fluchtend mit der Bewegungsachse des Kolbens 22 unter dem Dichtkörper 23 verlegt. Der Deckel 24 schließt die Ventilkammer nun ohne die Auslassöffnung dicht ab. Durch eine mit der neuen Auslassöffnung im Ventilgehäuse 20 fluchtende axiale Bohrung im Dichtkörper 23 kann Medium bei geöffnetem Ventilsitz durch die Durchlassöffnung 13 und die axiale Bohrung im Dichtkörper 23 und die neue mit der Bewegungsachse des Kolbens 22 fluchtende Auslassöffnung in einen mit dieser Auslassöffnung fest verbundenen Druckspeicherbehälter S strömen. Der ebenfalls mit der Bewegungsachse des Kolbens 22 fluchtende Verbindungskanal 14 ermöglicht die pneumatische oder hydraulische Kommunikation des Mediums mit der zweiten Kolbenwirkfläche A2 und bewirkt ein Schließen des Sperrventils bei Erreichen des vorgegebenen Sperrdrucks. Diese Bauvariante des erfindungsgemäßen Sperrventils kann besonders platzsparend ausgeführt werden. Sie eignet sich bei geeigneter Ausgestaltung eines Entnahmekanals und eines Entnahmeventils zur Ausbildung als Drucksperrventileinheit entsprechend Figur 2. Die erforderlichen Änderungen sind einem Fachmann geläufig.

Bei allen Ausführungsformen , in denen ein Dichtkörper 21 verwendet wird, muss der Dichtkörper 21 zum Ventilgehäuse 20 aus Sicherheitsgründen abgedichtet werden, damit keine zusätzlichen Kräfte entstehen und auf die Dichtkante des Dichtkörpers wirken können.

Die Erfindung ist sowohl für stationär betriebene Druckspeichersysteme als auch für Druckspeichersysteme in Fahrzeugen geeignet. Die Bezeichnung Fahrzeug umfasst in dieser Patentschrift beispielsweise Kraftfahrzeuge, Schienenfahrzeuge, sowie Wasser- und Luftfahrzeuge. Alle angegebenen Druckwerte sind beispielhaft und führen zu keiner Einschränkung der Erfindung und des Druckbereiches für den die Erfindung beansprucht wird.

### Bezugszeichenliste

- 10: Zulauföffnung
- 11: Auslassöffnung
- 12: Entlastungsöffnung
- 13: Durchlassöffnung
- 14: Verbindungskanal
- 15,15a: Entnahmekanal
- 16: Kanal
- 17: Ventilkammer Einlassbereich
- 18: Ventilkammer Entlastungsbereich
- 19: Ventilkammer Speicherbereich
- 20: Ventilgehäuse
- 21: Dichtkörper
- 22: Kolben
- 23: Feder
- 24: Deckel
- 25: Distanzhalter
- 26: Ventilgehäuse
- 27: Ventilaufnahmeblock
- 28: Rückschlagventil
- 29: Filter
- 30: Entnahmeventil
- 31: Stellfeder
- 32: Feder-Fixierschraube
- 33,34: Verschlusselemente
- 35: Klemmschraube
- 36: Überdruckventil
- 37,38: Gleitflächen
- 39: Dichtkante
- 41,42,43: Dichtelemente
- 48: Dichtung
- 50: Speicherventilblock mit Druckregler
- 51: Elektrisches Sicherheitsventil
- 52: Druckregler
- 53: Speicherventilblock mit Sicherheitsventil
- 55: Druckleitung zum Verbraucher

- 60: Kraftfahrzeugkarosserie
- 65: Tankstutzen (Stand der Technik)
- 66,67: Druckleitung
- 70: Tankstutzeneinheit (Stand der Technik)
- A1,A2: Erste und Zweite Kolbenwirkflächen
- A3: Auflage
- D1,D4: Innendurchmesser Verbindungskanal
- D2,D3: Aussendurchmesser Kolbenteilabschnitte
- DSV: **D**ruck**s**perr**v**entileinheit
- L1: Gesamtlänge Kolben
- L2,L3: Länge Kolbenteilabschnitte
- P: Drucksensor
- S: Druckspeicherbehälter
- SV: **S**perr**v**entil

## Patentansprüche

1. Drucksperrventileinheit für einen Druckspeicherbehälter (S) für ein Medium, wobei ein Ventilgehäuse (20) eine Ventilkammer mit einer Zulauföffnung (10) und einer dem Druckspeicherbehälter (S) zugewandten Auslassöffnung (11), einen beweglichen Kolben (22), und zumindest eine Feder (23) aufweist, wobei der Kolben (22) zumindest einen axialen Verbindungskanal (14) aufweist und durch zumindest zwei in der Ventilkammer angeordnete Dichtelemente (41,42) axial beweglich geführt ist, wobei eine einem Einlassbereich (17) der Ventilkammer zugewandte erste Kolbenwirkfläche (A1) des Kolbens (22) und ein Dichtkörper (21) oder das Ventilgehäuse (20) einen Ventilsitz bilden, und wobei durch Änderung des Druckes in einem an eine zweite Kolbenwirkfläche (A2) angrenzenden Speicherbereich (19) der Ventilkammer der Kolben (22) axial bewegbar ist und eine zwischen der Zulauföffnung (10) und der Auslassöffnung (11) angeordnete Durchlassöffnung (13) reversibel verschlossen und geöffnet werden kann, wobei die Durchlassöffnung (13) in drucklosem Zustand durch die Feder (23) offen gehalten wird und wobei der Speicherbereich (19) der Ventilkammer über einen Entnahmekanal (15,15a) und ein Entnahmeventil (30) mit dem Einlassbereich (17) der Ventilkammer verbindbar angeordnet ist,
**dadurch gekennzeichnet, dass** zwischen dem Speicherbereich (19) und einem zwischen dem Einlassbereich (17) und dem Speicherbereich (19) der Ventilkammer angeordneten Entlastungsbereich (18) ein Überdruckventil (36) angeordnet ist, dessen Öffnungsdruck über dem Sperrdruck des Drucksperrventiles liegt.

2. Drucksperrventileinheit nach Anspruch 1,
**dadurch gekennzeichnet, dass**
das Entnahmeventil (30) als Kugel- oder Kegelventil ausgebildet ist und durch eine Stellfeder (31) in einem drucklosen Zustand geschlossen gehalten wird, wobei die Stellfeder (31) auf der dem Einlassbereich (17) zugewandten Seite des Entnahmeventils (30) angeordnet ist.

3. Drucksperrventileinheit nach Anspruch 2,
**dadurch gekennzeichnet, dass**
die Federkraft der Stellfeder (31) über eine Feder-Fixierschraube (32) einstellbar ist.

4. Drucksperrventileinheit nach Anspruch 3,
**dadurch gekennzeichnet, dass**
die Feder-Fixierschraube (32) koaxial mit der Stellfeder (31) angeordnet ist und einen axialen Kanal (16) aufweist der als Drossel ausgebildet ist.

5. Drucksperrventileinheit nach einem der vorhergehenden Ansprüche,
**dadurch gekennzeichnet, dass**
der Entnahmekanal (15,15a) und das Entnahmeventil (30) im Ventilgehäuse (26) integriert angeordnet sind.

6. Drucksperrventileinheit nach einem der vorhergehenden Ansprüche,
**dadurch gekennzeichnet, dass**
die erste Kolbenwirkfläche (A1) und der Dichtkörper (21) oder das Ventilgehäuse (20) so ausgebildet sind, dass in einer Schließposition des Kolbens (22) die Dichtwirkung an einer Dichtkante (39) im Bereich des äußeren Randes der ersten Kolbenwirkfläche (A1) auftritt.

7. Drucksperrventileinheit nach einem der vorhergehenden Ansprüche,
**dadurch gekennzeichnet, dass**
die Zulauföffnung (10) radial außerhalb der Kolbenwirkfläche (A1) in den Einlassbereich (17) der Ventilkammer mündet.

8. Drucksperrventileinheit nach einem der vorhergehenden Ansprüche,
**dadurch gekennzeichnet, dass**
die zweite Kolbenwirkfläche (A2) grösser ist als die erste Kolbenwirkfläche (A1).

9. Druckssperrventileinheit nach einem der vorhergehenden Ansprüche,
**dadurch gekennzeichnet, dass**
die zumindest zwei Dichtelemente (41,42) in entsprechenden Ausnehmungen im Ventilgehäuse (20) angeordnet sind.

10. Drucksperrventileinheit nach einem der vorhergehenden Ansprüche,
**dadurch gekennzeichnet, dass**
der Dichtkörper (21) und/oder der Kolben (22) aus einem elastisch verformbaren Material hergestellt sind.

11. Drucksperrventileinheit nach einem der vorhergehenden Ansprüche,
**dadurch gekennzeichnet, dass**
ein Entlastungsbereich (18) der Ventilkammer zwischen den zumindest zwei Dichtelementen (41,42) eine Entlastungsöffnung (12) aufweist.

12. Drucksperrventileinheit nach einem der Anspruche 6 bis 11,
**dadurch gekennzeichnet, dass** die Entlastungsöffnung (12) mit einer Leitung zur Entsorgung von austretendem Medium verbunden ist.

13. Drucksperrventileinheit nach einem der vorhergehenden Ansprüche,
**dadurch gekennzeichnet, dass**
der Sperrdruck des Sperrventils im Wesentlichen durch die Federkraft der Feder (23) und die Kolbenwirkflächen (A1, A2) bestimmt ist.

14. Drucksperrventileinheit nach einem der vorhergehenden Ansprüche,
**dadurch gekennzeichnet, dass**
die Federkraft der Feder (23) über die Einschraubtiefe eines Deckels (24) einstellbar ist.

15. Drucksperrventileinheit nach einem der vorhergehenden Ansprüche,
**dadurch gekennzeichnet, dass**
Distanzhalter (25) am Deckel (24) oder entsprechende Freistellungen an der zweiten Kolbenwirkfläche (A2) des Kolbens (22) vorgesehen sind.

16. Drucksperrventileinheit nach einem der vorhergehenden Ansprüche,
**dadurch gekennzeichnet, dass**
das Ventilgehäuse (20) an dem die Auslassöffnung (11) aufweisenden Ende zumindest teilweise in eine Öffnung des Druckspeicherbehälters (S) hineinragt und dauerhaft mit dem Druckspeicherbehälter (S) verbunden ist.

17. Drucksperrventileinheit nach einem der vorhergehenden Ansprüche,
**dadurch gekennzeichnet, dass**
die Auslassöffnung (11) über einen Ventilaufnahmeblock (27) oder über einen zumindest ein zusätzliches Ventil aufweisenden Speicherventilblock (50) mit dem Druckspeicherbehälter (S) verbindbar ist.

18. Druckspeichersystem umfassend zumindest einen Druckspeicherbehälter (S) und zumindest eine damit wirkverbundene Drucksperrventileinheit nach zumindest einem der vorhergehenden Ansprüche.

## Claims

1. Pressure shut-off valve unit for a pressure storage container (S) for a medium, wherein a valve housing (20) has a valve chamber with an intake opening (10) and an outlet opening (11) facing the pressure storage container (S), a movable piston (22), and at least one spring (23), wherein the piston (22) has at least one axial connecting channel (14) and is guided in an axially movable manner by at least two sealing elements (41, 42) arranged in the valve chamber, wherein a first effective piston surface (A1) of the piston (22), said first effective piston surface facing an inlet region (17) of the valve chamber, and a sealing body (21) or the valve housing (20) form a valve seat, and wherein, by changing the pressure in a storage region (19) of the valve chamber, said storage region being adjacent to a second effective piston surface (A2), the piston (22) is axially movable and a passage opening (13) arranged between the intake opening (10) and the outlet opening (11) can be reversibly closed and opened, wherein, in the unpressurized state, the passage opening (13) is kept open by the spring (23), and wherein the storage region (19) of the valve chamber is arranged so as to be connectable to the inlet region (17) of the valve chamber via a removal channel (15, 15a) and a removal valve (30), **characterized in that** a pressure control valve (36), the opening pressure of which lies above the shut-off pressure of the pressure shut-off valve, is arranged between the storage region (19) and a relief region (18) arranged between the inlet region (17) and the storage region (19) of the valve chamber.

2. Pressure shut-off valve unit according to Claim 1, **characterized in that** the removal valve (30) is designed as a spherical or conical valve and is kept closed in an unpressurized state by an adjustment spring (31), wherein the adjustment spring (31) is arranged on that side of the removal valve (30) which faces the inlet region (17).

3. Pressure shut-off valve unit according to Claim 2, **characterized in that** the spring force of the adjustment spring (31) is adjustable via a spring-fixing screw (32).

4. Pressure shut-off valve unit according to Claim 3, **characterized in that** the spring-fixing screw (32) is arranged coaxially with the adjustment spring (31) and has an axial channel (16) which is designed as a throttle.

5. Pressure shut-off valve unit according to one of the preceding claims, **characterized in that** the removal channel (15, 15a) and the removal valve (30) are arranged integrated in the valve housing (26).

6. Pressure shut-off valve unit according to one of the preceding claims, **characterized in that** the first effective piston surface (A1) and the sealing body (21) or the valve housing (20) are designed in such a manner that, in a closed position of the piston (22), the sealing effect occurs at a sealing edge (39) in the region of the outer border of the first effective piston surface (A1).

7. Pressure shut-off valve unit according to one of the preceding claims, **characterized in that** the intake opening (10) opens radially outside the effective piston surface (A1) into the inlet region (17) of the valve chamber.

8. Pressure shut-off valve unit according to one of the preceding claims, **characterized in that** the second effective piston surface (A2) is larger than the first effective piston surface (A1).

9. Pressure shut-off valve unit according to one of the preceding claims, **characterized in that** the at least two sealing elements (41, 42) are arranged in corresponding recesses in the valve housing (20).

10. Pressure shut-off valve unit according to one of the preceding claims, **characterized in that** the sealing body (21) and/or the piston (22) are/is produced from an elastically deformable material.

11. Pressure shut-off valve unit according to one of the preceding claims, **characterized in that** a relief region (18) of the valve chamber between the at least two sealing elements (41, 42) has a relief opening (12).

12. Pressure shut-off valve unit according to one of Claims 6 to 11, **characterized in that** the relief opening (12) is connected to a line for disposing of emerging medium.

13. Pressure shut-off valve unit according to one of the preceding claims, **characterized in that** the shut-off pressure of the shut-off valve is substantially determined by the spring force of the spring (23) and the effective piston surfaces (A1, A2).

14. Pressure shut-off valve unit according to one of the preceding claims, **characterized in that** the spring force of the spring (23) is adjustable via the screw-in depth of a cover (24).

15. Pressure shut-off valve unit according to one of the preceding claims, **characterized in that** spacers (25) are provided on the cover (24) or corresponding recesses are provided on the second effective piston surface (A2) of the piston (22).

16. Pressure shut-off valve unit according to one of the preceding claims, **characterized in that** the valve housing (20) at least partially projects at the end having the outlet opening (11) into an opening in the pressure storage container (S) and is permanently connected to the pressure storage container (S).

17. Pressure shut-off valve unit according to one of the preceding claims, **characterized in that** the outlet opening (11) is connectable to the pressure storage container (S) via a valve-receiving block (27) or via a storage valve block (50) having at least one additional valve.

18. Pressure storage system comprising at least one pressure storage container (S) and at least one pressure shut-off valve unit, which is operatively connected thereto, according to at least one of the preceding claims.

## Revendications

1. Unité à clapet antiretour pour un réservoir d'accumulation de pression (S) pour un agent, un carter de soupape (20) comprenant un compartiment de soupape avec une ouverture d'amenée (10) et une ouverture d'échappement (11) orientée vers le réservoir d'accumulation de pression (S), un piston mobile (22) et au moins un ressort (23), le piston (22) comportant au moins un canal de liaison axial (14) et étant guidé de façon mobile dans le plan axial par au moins deux éléments d'étanchéité (41, 42) disposés dans le compartiment de soupape, une première surface active de piston (A1) du piston (22) orientée vers une zone d'admission (17) du compartiment de soupape et un corps d'étanchéité (21) ou le carter de soupape (20) formant un siège de soupape et la modification de la pression permettant de déplacer le piston (22) dans le plan axial dans une zone d'accumulateur (19), connexe à une deuxième surface active de piston (A2), du compartiment de soupape et une ouverture traversante (13) disposée entre l'ouverture d'amenée (10) et l'ouverture d'échappement (11) pouvant être ouverte et fermée de façon réversible, l'ouverture traversante (13) étant maintenue ouverte par le ressort (23) dans un état sans pression et la zone d'accumulateur (19) du compartiment de soupape étant disposée de façon à pouvoir être reliée à la zone d'admission (17) du compartiment de soupape via un canal de prélèvement (15, 15a) et une soupape de prélèvement (30), **caractérisée en ce qu'**une soupape de surpression (36) dont la pression d'ouverture dépasse la pression de blocage du clapet antiretour est disposée entre la zone d'accumulateur (19) et une zone de décharge (18) disposée entre la zone d'admission (17) et la zone d'accumulateur (19) du compartiment de soupape.

2. Unité à clapet antiretour selon la revendication 1, **caractérisée en ce que** la soupape de prélèvement (30) prend la forme d'une soupape sphérique ou conique et est maintenue fermée par un ressort de réglage (31) dans un état sans pression, le ressort de réglage (31) étant disposé sur le côté de la soupape de prélèvement (30) orienté vers la zone d'admission (17).

3. Unité à clapet antiretour selon la revendication 2, **caractérisée en ce que** la force de ressort du ressort de réglage (31) est réglable via une vis de fixation de ressort (32).

4. Unité à clapet antiretour selon la revendication 3, **caractérisée en ce que** la vis de fixation de ressort (32) est disposée dans le plan coaxial avec le ressort de réglage (31) et comporte un canal (16) axial prenant la forme d'un étranglement.

5. Unité à clapet antiretour selon l'une quelconque des revendications précédentes, **caractérisée en ce que** le canal de prélèvement (15, 15a) et la soupape de prélèvement (30) sont disposés de façon à être intégrés dans le carter de soupape (26).

6. Unité à clapet antiretour selon l'une quelconque des revendications précédentes, **caractérisée en ce que** la première surface active de piston (A1) et le corps d'étanchéité (21) ou le carter de soupape (20) sont réalisés de telle sorte que dans une position de fermeture du piston (22), l'effet l'étanchéité se produit au niveau d'une arête étanche (39) dans la zone de la bordure extérieure de la première surface active de piston (A1).

7. Unité à clapet antiretour selon l'une quelconque des revendications précédentes, **caractérisée en ce que** l'ouverture d'amenée (10) débouche dans le plan radial à l'extérieur de la surface active de piston (A1), dans la zone d'admission (17) du compartiment de soupape.

8. Unité à clapet antiretour selon l'une quelconque des revendications précédentes, **caractérisée en ce que** la deuxième surface active de piston (A2) est plus grande que la première surface active de piston (A1).

9. Unité à clapet antiretour selon l'une quelconque des revendications précédentes, **caractérisée en ce que** les au moins deux éléments d'étanchéité (41, 42) sont disposés dans des évidements correspondants dans le carter de soupape (20).

10. Unité à clapet antiretour selon l'une quelconque des revendications précédentes, **caractérisée en ce que** le corps d'étanchéité (21) et/ou le piston (22) sont fabriqués à partir d'une matière élastiquement déformable.

11. Unité à clapet antiretour selon l'une quelconque des revendications précédentes, **caractérisée en ce qu'**une zone de décharge (18) du compartiment de soupape comporte une ouverture de décharge (12) entre les au moins deux éléments d'étanchéité (41, 42).

12. Unité à clapet antiretour selon l'une quelconque des revendications 6 à 11, **caractérisée en ce que** l'ouverture de décharge (12) est reliée à une conduite d'évacuation de l'agent sortant.

13. Unité à clapet antiretour selon l'une quelconque des revendications précédentes, **caractérisée en ce que** la pression de blocage du clapet antiretour est pour l'essentiel définie par la force de ressort du ressort (23) et par les surfaces actives de piston (A1, A2).

14. Unité à clapet antiretour selon l'une quelconque des revendications précédentes, **caractérisée en ce que** la force de ressort du ressort (23) peut être réglée sur la profondeur de vissage d'un cache (24).

15. Unité à clapet antiretour selon l'une quelconque des revendications précédentes, **caractérisée en ce que** des éléments d'écartement (25) sont prévus au niveau du cache (24) ou des emplacements vidés correspondants au niveau de la deuxième surface active de piston (A2) du piston (22).

16. Unité à clapet antiretour selon l'une quelconque des revendications précédentes, **caractérisée en ce que** le carter de soupape (20) rentre au moins en partie dans une ouverture du réservoir d'accumulation de pression (S) au niveau de l'extrémité comportant l'ouverture d'échappement (11) et est durablement relié au réservoir d'accumulation de pression (S).

17. Unité à clapet antiretour selon l'une quelconque des revendications précédentes, **caractérisée en ce que** l'ouverture d'échappement (11) peut être reliée au réservoir d'accumulation de pression (S) via un bloc de logement de soupape (27) ou via un bloc de soupape d'accumulateur (50) comportant au moins une soupape supplémentaire.

18. Système d'accumulateur de pression comprenant au moins un réservoir d'accumulation de pression (S) et au moins une unité à clapet antiretour ainsi activement reliée selon au moins l'une quelconque des revendications précédentes.
